# EUROPÄISCHE PATENTSCHRIFT

(11) **EP 0 514 739 B1**
(45) Veröffentlichungstag und Bekanntmachung des Hinweises auf die Patenterteilung: **13.09.1995**
(21) Anmeldenummer: 92107951.3
(22) Anmeldetag: 12.05.1992
(51) Int. Cl.: B01D 53/56

(54) **Verfahren und Vorrichtung zur Minderung der NOx-emission**
Process and device for reducing NOx emissions
Procédé et installation pour reduire les emissions d'oxydes d'azote

(30) Priorität: 24.05.1991 DE 4116950
(43) Veröffentlichungstag der Anmeldung: 25.11.1992
(73) Patentinhaber: BAYER AG, 51368 Leverkusen (DE); DET-DRÄGER-ENERGIE-TECHNIK GmbH, D-47669 Wachtendonk (DE)
(72) Erfinder: Vogtel, Peter, Dr., W-5090 Leverkusen 1 (DE); Faust, Paul-Ulrich, Dr., New Martinsville, WV 26155-0500 (US); Steinhoff, Georg, Dr., W-4150 Krefeld 1 (DE); Strunk, Falko, Dr., W-4173 Krefeld-Eyll (DE); Dräger, Norbert, Dipl.-Ing., W-4150 Krefeld 1 (DE)
(74) Vertreter: Kirchner, Dietrich, Dr.

(56) Entgegenhaltungen:
- WO-A-91/16970
- WO-A-92/19532
- DE-A- 2 515 933
- US-A- 4 033 725
- US-A- 4 405 587

## Beschreibung

Die Erfindung betrifft ein Verfahren zur Minderung der NOₓ-Emission bei der thermischen Umsetzung von stickstoffoxydhaltigen Stoffströmen, z.B. Beladung mit N₂O (Lachgas) und/oder NO (Stickstoffmonoxyd), mit Brennstoffkomponenten oder bei der Oxydation von stickstoffhaltigen Brennstoffen mit Sauerstoff oder Luft durch eine stufenweise Reaktionsführung, wobei in der ersten Stufe eine vollständige Reduktion aller vorhandenen oder sich spontan bildenden Stickstoffoxyde erfolgt und in einer nachfolgenden Stufe bzw. in nachfolgenden mehreren Stufen eine Nachreaktion bis zur vollständigen Oxydation aller Reduktionskomponenten durchgeführt wird.

Die Emission von Stickstoffoxyden ist bei der Verbrennung stickstoffgebundener, fossiler Brennstoffe und organischer Rückstände, beispielsweise organischer Flüssigkeiten mit organisch gebundenem Stickstoff sowie bei der Nachoxydation von Abgasen oder Abdämpfen, die bereits hohe Anteile von Stickoxyden mitbringen, wesentlich höher als bei der Verbrennung der relativ stickstofffreien Brennstoffe Erdgas und leichtes Heizöl Öl mit Luft- bzw. Sauerstoffüberschuß. So entstehen üblicherweise Stickoxyde mit einer Konzentration von 5000 ppm. Zulässig sind jedoch nur 100 ppm. Bei der Verbrennung mit Sauerstoffüberschuß wird nämlich der im Brennstoff enthaltene Stickstoff vollständig oder teilweise in Stickstoffoxyde umgewandelt und bereits vorhandene Stickstoffoxyd-Komponenten durchlaufen die Reaktion als quasi inerte Komponenten, so daß derartige hohe Emissionswerte verursacht werden.

Um die NOₓ-Emission zu reduzieren, ist die sogenannte Stufenverbrennung bekannt. Darunter versteht man eine Aufteilung des gesamten Verbrennungsprozesses in eine partielle Oxydation, d. h. eine unvollständige Verbrennung im unterstöchiometrischen Bereich mit teilweise freiwerdender Reaktionswärme und einer weiteren oder mehrstufigen Nachreaktion bis zum vollständigen Umsatz aller oxydierbaren Reaktionskomponenten.

Derartige Verfahren sind zum Beispiel in US-A-4033725 und US-A-4405587 beschrieben. Aus US-A-4033725 ist ein Ofensystem mit zwei Verbrennungskammern bekannt. Die beiden Kammern sind durch eine Öffnung miteinander verbunden. In der ersten Kammer werden die NOₓ-haltigen Abgase unter Zugabe von Kohlenwasserstoffen und Dampf reduziert. In der zweiten Kammer erfolgt die vollständige Verbrennung aller brennbaren Gaskomponenten nach der Reduktion, wobei die Temperaturen so niedrig gehalten werden, daß keine Rückbildung von Stickoxyden stattfinden kann.

Bei dem Verfahren gemäß US-A-4405587 wird ein NOₓ-haltiger Abgasstrom zunächst bei Temperaturen zwischen ca. 1100°C und 1650°C beim stöchiometrischen Überschuß von Kohlenwasserstoffen verbrannt. Anschließend werden die aus der ersten Verbrennungsstufe kommenden Reaktionsprodukte in einer zweiten Stufe bei Temperaturen zwischen 870°C und 1000°C mit Wasserdampf in Kontakt gebracht, wobei alle brennbaren noch vorhandenen Anteile oxydiert werden. Die heißen Abgase aus der ersten Reaktionsstufe strömen über eine Verbindungsleitung in die zweite Reaktionsstufe.

Die WO-A-9219532 mit dem Anmeldedatum 24.04.92., dem Prioritätsdatum 25.04.91. und dem Veröffentlichungsdatum 12.11.92. beschreibt eine Vorrichtung die aus zwei durch einen Aktivierungsregenerator getrennten Stufen besteht, wobei in beiden Stufen einem Brenner Abgas und Luft bzw. Sauerstoff zugeführt wird.

Bei Gasgemischen mit hohen Anteilen an Stickstoffoxyden, z. B. Lachgas oder Stickstoffmonoxyd, muß entsprechend dieser Volumenanteile mindestens soviel Brennstoff zugeführt werden, daß diese den gesamten Sauerstoffanteil der Stickstoffoxyde reduzieren können. Da hierbei zusätzlich zum Heizwert der Brennstoffkomponenten die Bildungsenergien der Stickstoffoxyde freigesetzt werden und bei der Oxydation der Brennstoffkomponenten mit dem Sauerstoff der Stickstoffoxyde immer eine stöchiometrische Umsetzung erfolgt und relativ wenig Stickstoff im Gegensatz zur Umsetzung mit Luft zur Erniedrigung der theoretischen Reaktionstemperatur zur Verfügung steht, stellt sich eine extrem hohe Temperatur ein, die bei Vorhandensein von freiem Sauerstoff entsprechend dem Gleichgewicht zu hohen NOₓ-Werten führen würde. Dementsprechend muß Sorge getragen werden, daß, wie bei der partiellen Oxydation, eine reduzierende Atmosphäre erhalten bleibt. Dies kann nur durch Zuführung von zusätzlichen Brennstoff bzw. reduzierenden Stoffkomponenten erreicht werden. Endotherme Spaltungsreaktionen erniedrigen zwar damit in Abhängigkeit der Menge die Temperatur, doch muß aus wirtschaftlichen Gründen die Überschußbrennstoffmenge so niedrig gehalten werden, was wiederum zu einem geringen chemischen Potential führt und ohne kinetische Unterstützung eine sehr lange Verweilzeit bis zur vollständigen Umsetzung benötigen würde.

Dabei treten bei der partiellen Oxydation von Brennstoffen, beispielsweise bei der Kohle- oder Ölvergasung so gut wie keine Stickstoffoxyde auf, da bei diesen Reaktionen stets eine reduzierende Gasphase die Bildung von Stickstoffoxyden aufgrund des geringen Partialdruckes von Sauerstoffatomen sehr weit einschränkt und gleichzeitig in statu nascendi die bereits gebildeten Stickstoffoxydmoleküle reduziert. Dieser Vorgang wird durch eine Vielzahl von Reaktionen bestimmt, die zusammen zwar ein bestimmtes Gleichgewicht anstreben, doch alle unterschiedlich, sogar teilweise gegenläufig von den thermodynamischen Zustandsgrößen wie Temperatur, Druck oder chemischem Potential beeinflußt werden. Die partielle Oxydation läuft dabei aufgrund der nur teilweise freiwerdenden Reaktionswärme und durch endotherme Reaktionen bei tieferen Temperaturen als bei der vollständigen, stöchiometrischen Verbrennung ab, so daß einerseits die Bildung von atomarem Sauerstoff aufgrund einer Dissoziation von Reaktionsprodukten nur in geringeren Maße auftritt und damit schon die NOₓ-Gleichgewichtskonzentration bei dieser Temperatur geringer ist. Darüber hinaus sorgt das hohe chemische Potential der reduzierenden Komponenten dafür, daß die Wahrscheinlichkeit einer Reaktion zu molekularem Stickstoff sehr groß ist.

In der der partiellen Oxydation nachfolgenden Nachreaktionsstufe findet dann die vollständige Oxydation der noch aus der partiellen Oxydation vorhandenen Reduktionskomponenten wie Kohlenmonoxyd und Wasserstoff statt. Diese sind in der ersten Stufe entstanden und bilden die Reaktionspartner zur Reduktion von NOₓ zu molekularem Stickstoff und Wasser.

Damit laufen bei der Stufenverbrennung alle Reaktionsstufen auf einem thermodynamisch niedrigeren Niveau ab, womit der kinetische Reaktionsablauf bis zum vollständigen Umsatz in jeder Reaktionsstufe gegenüber einer einstufigen Verbrennung verschlechtert bzw. in seiner Reaktionsgeschwindigkeit reduziert wird, da der Anteil der aktivierten Moleküle dem Temperaturniveau entsprechend abnimmt. Um dies auszugleichen, ist eine wesentlich längere Verweilzeit bis zur Einstellung eines Gleichgewichtes zwischen allen Reaktionsprodukten erforderlich. Dies ist jedoch nachteiligerweise wirtschaftlich nicht realisierbar. Da in der ersten Stufe exotherme sowie endotherme Reaktionen gleichzeitig ablaufen, die gemeinsam eine Reaktionstemperatur für das Gleichgewicht bestimmen, sollte jedes Raumelement im gesamten Reaktionsraum gleichviel Reaktionspartner beinhalten. Dies wird allerdings auch durch eine ein- oder mehrkanalige Einführung der Reaktionspartner in den Reaktionsraum nur ungenügend erreicht. Diese primäre Vermischung kann weiterhin zwar durch die konstruktive Ausbildung der Einströmkanäle optimiert werden, dennoch wird dies nachteiligerweise nicht den hohen Anforderungen an den Reaktionsablauf gerecht.

Davon ausgehend liegt der Erfindung die Aufgabe zugrunde, bei einem Verfahren der eingangs angegebenen Art zur Minderung der NOₓ-Emission den Reaktionsablauf und damit die Wirtschaftlichkeit zu verbessern; ferner soll eine technisch einfache Vorrichtung zur Durchführung des Verfahrens geschaffen werden.

Als technische Lösung wird mit der Eindung verfahrensmäßig vorgeschlagen, daß die Oxydation der Reduktionskomponenten in der Nachreaktionsstufe mit kinetischer Unterstützung von Aktivierungsregeneratoren erfolgt.

Ein Aktivierungsregenerator besteht dabei aus einer Vielzahl von Durchtrittskanälen oder -Öffnungen, in denen eine intensive Vermischung der Reaktionspartner und eine Vergleichmäßigung (Homogenisierung) der Temperatur über den gesamten Strömungsquerschnitt stattfindet.

Durch die zusätzliche Aktivierung der Reaktionspartner lassen sich die kinetischen Bedingungen für den Reaktionsablauf in der entsprechenden Reaktionsstufe derart verbessern, daß nahezu optimale Reaktionsbedingungen vorgegeben werden. Die NOₓ-Emission läßt sich damit nahezu vollständig unterdrücken bzw. reduzieren.

Vorzugsweise werden in der ersten Reaktionsstufe die Reaktionspartner zusätzlich aktiviert.

In einer bevorzugten Weiterbildung des erfindungsgemäßen Verfahrens wird jedoch vorgeschlagen, daß in sämtlichen Reaktionsstufen die Reaktionspartner zusätzlich aktiviert werden. Dies bringt einen optimalen Ablauf des gesamten Verbrennungsverfahrens mit sich, da in jeder Reaktionsstufe optimale Bedingungen eingestellt werden können.

Eine weitere Weiterbildung des erfindungsgemäßen Verfahrens schlägt vor, daß die zusätzliche Aktivierung hinter der jeweiligen Reaktionsstufe durchgeführt wird.

In einer bevorzugten Weiterbildung des erfindungsgemäßen Verfahrens wird vorgeschlagen, daß durch die entsprechende Einrichtung für die Aktivierung die Reaktionspartner miteinander vermischt werden, wobei vorzugsweise die Reaktionspartner sowohl im Makrobereich als auch im Mikrobereich miteinander vermischt werden. Zusätzlich oder aber auch alternativ wird weiterhin vorgeschlagen, daß durch die entsprechende Einrichtung für die Aktivierung ein Wärmestromausgleich durchgeführt wird.

Mit dieser erfindungsgemäßen Weiterbildung wird daher der Reaktionsablauf im Reaktionsraum mit Unterstützung eines Aktivierungsregenerators dahingehend beeinflußt, daß sowohl eine Vermischung der Reaktionspartner im Makrobereich als auch im Mikrobereich (zwangsläufig) erreicht wird. Die dadurch resultierende homogene Verteilung aller Reaktionspartner dient somit als Reaktionsbeschleuniger zur Verkürzung der Verweildauer der Reaktionspartner im Reaktionsraum. Darüber hinaus sorgt der Aktivierungsregenerator für einen schnellen Wärmestromausgleich, welcher im wesentlichen durch einen intensiven Strahlungswärmeaustausch erreicht wird. Damit können Nachreaktionen dahingehend beeinflußt werden, daß sie in Bezug auf das geringe Potential in Richtung des erreichbaren chemischen Gleichgewichtes bei der Reaktionstemperatur noch möglich sind. Um das Ergebnis niedriger NOₓ-Emission erreichen zu können, ist es von erfindungswesentlicher Bedeutung, bei diesen thermodynamisch relativ ungünstigen Bedingungen eine Aktivierung der möglichen Reaktionspartner spontan zu erreichen, was mit der erfindungsgemäßen Vermischung der Reaktionspartner sowie mit dem Wärmestromausgleich erreicht wird. Da die partielle Oxydation in der ersten Reaktionsstufe von anderen Reaktionen als den stöchiometrischen Verbrennungsreaktionen bestimmt wird, sind entsprechend andere thermodynamische Bedingungen einzuhalten. Hier bestimmen entscheidend die heterogene, die homogene Wassergasreaktion und die Boudouard-Reaktion und darüber hinaus die Zersetzung aller sich im Gas befindlichen Kohlenwasserstoffe den Reaktionsablauf. Da alle Reaktionsgleichungen untereinander in Abhängigkeit stehen, kann das angestrebte Gleichgewicht zwischen den sich daraus ergebenden Reaktionsprodukten bei einer bestimmten Temperatur durch eine gezielte Zuführung von Reaktionspartnern beeinflußt werden. Auch in der Nachreaktionsstufe müssen dabei spontane Aktivierungsbedingungen für die Reaktion erzwungen werden, die erfindungsgemäß durch eine schnelle Vermischung mit dem Oxydationspartner Luft oder möglicherweise auch Sauerstoff bei gleichzeitigem Temperaturausgleich in relativ kurzen Verweilzeiten erreicht werden. In dieser Nachoxydationsstufe leistet der Aktivierungsregenerator als Mischer und Wärmespeicher erfindungsgemäß ebenfalls die kinetische Unterstützung. Obwohl die exothermen Oxydationsreaktionen Wärme freisetzen, treten lokal nur geringfügige Temperaturerhöhungen auf, da zur Aufnahme der Wärme immer ein großer Inertgasstrom zur Verfügung steht. Somit bleibt das Temperaturniveau in einem Bereich, in dem sich Stickstoffoxyde als thermisches NOₓ nur im Rahmen der zulässigen Grenzkonzentrationen bilden können.

Der Erfolg des erfindungsgemäßen Verfahrens liegt somit in der Schaffung einer homogenen Verteilung aller Reaktionspartner sowie der Einstellung der gleichen Temperatur in jedem Volumenelement, die größer als 1000°C sein sollte.

Von großer Bedeutung ist, daß in einer verfahrensmäßigen Weiterbildung den Reaktionsstufen mit unterstöchiometrischer Verbrennung zusätzlich Wasserdampf als Reaktionspartner zugeführt wird. Dieser Wasserdampf kann dabei entweder durch Einspritzen von Wasser in die Reaktionszone oder direkt als Dampf zugeführt werden. Dabei wird eine Verschiebung der Gleichgewichtskonzentrationen in Richtung eines besseren Reduktionspotentials bewirkt. Mit dem Anteil von Wasserdampf in der Reaktionsphase kann darüber hinaus der Ausfall von Rußkristallen unterbunden werden, so daß damit eine erhebliche Verminderung des wirksamen Reduktionspotentials vermieden wird.

Weiterhin wird in einer Weiterbildung des erfindungsgemäßen Verfahrens vorgeschlagen, daß die Reaktionspartner in der jeweiligen Reaktionsstufe in Abhängigkeit von der optimalen Reaktionstemperatur im entsprechenden Verhältnis zueinander eingebracht werden.

Schließlich wird in einer verfahrensmäßigen Weiterbildung vorgeschlagen, daß die Temperatur in jeder Reaktionsstufe mit zurückgeführten, kaltem Rauchgas geregelt wird.

Eine zur Durchführung des erfindungsgemäßen Verfahrens besonders geeignete Vorrichtung besteht aus einem Ofen, der eine Brennstoffzuführung bzw. eine Abgaszuführung sowie Sauerstoff- oder Luftzuführungen umfaßt und ist dadurch gekennzeichnet, daß der Ofen durch mindestens einen Aktivierungsregenerator in eine erste Reaktionsstufe S1 und mindestens eine darauffolgende Nachreaktionsstufe S2 unterteilt ist, wobei die erste Reaktionsstufe S1 die Brennstoffzuführung bzw. die Abgaszuführung und eine Sauerstoff- oder Luftzuführung aufweist und in die Nachreaktionsstufe S1 nur eine Sauerstoff- oder Luftzuführung einmündet. Der Aktivierungsregenerator besteht vorzugsweise aus einer mit Durchtrittsöffnungen versehenen Wand.

Diese Wand ist dabei vorzugsweise jeweils hinter einer Reaktionsstufe angeordnet und erstreckt sich über den gesamten Querschnitt des Ofens, so daß die Reaktionspartner zwangsläufig durch die Durchtrittsöffnungen in der Wand hindurch müssen. Sind beispielsweise zwei Reaktionsstufen vorgesehen, so ist zwischen diesen Reaktionsstufen eine derartige Wand angeordnet. Zusätzlich ist auch im Anschluß an die zweite Reaktionsstufe eine Wand vorgesehen.

Diese Wand bildet einen technisch sehr einfachen Aktivierungsregenerator und ist konstruktiv so ausgebildet, daß sie einerseits als statischer Mischer für eine Makroverwirbelung der Reaktionspartner dient als auch die Funktion eines Wärmespeichers erfüllt. Die Wand stellt nämlich aufgrund ihrer hohen Wärmekapazität und dem guten Wärmeaustausch durch Strahlung in sehr kurzer Zeit die thermische Reaktionsbedingung ein und nimmt bei exothermen Reaktionen Wärme wieder auf, die dann bei Bedarf wieder abgegeben wird.

Der Aktivierungsregenerator und dabei insbesondere die Wand kann dabei entweder aus einem temperaturbeständigen keramischen Material oder einem temperaturbeständigen Metall, insbesondere Stahl und dabei insbesondere Sonderstahl bestehen. Diese Materialien sind dazu geeignet, die an einen Aktivierungsregenerator zu stellenden Anforderungen zu erfüllen, wobei darüber hinaus ein Aktivierungsregenerator aus keramischem Material unter Umständen auch als Katalysator wirkt.

Insbesondere wenn die Wand aus Metall besteht, ist sie vorzugsweise als Gitterwerk ausgebildet.

Um den Aktivierungsregenerator technisch einfach herstellen zu können, besteht dieser vorzugsweise aus einzelnen Regeneratorelementen.

Wenn dabei die Wand insbesondere aus keramischem Material besteht, besteht sie vorzugsweise aus einzelnen Steinen oder Platten, die fest miteinander verbunden aufeinandergeschichtet sind. Dadurch läßt sich auf technisch einfache Weise die Wand herstellen.

Vorzugsweise sind dabei die Steine oder Platten quaderförmig mit Durchtrittsöffnungen ausgebildet.

Weiterhin wird in einer Weiterbildung der Steine oder Platten vorgeschlagen, daß diese auf ihren Oberflächen jeweils zusätzliche Noppen oder dgl. aufweisen. Durch die so geschaffene Oberflächenvergrößerung wird eine Grenzschichtströmung ständig so beeinflußt, daß eine intensive Vermischung der Reaktionspartner im Mikrobereich erfolgt, welche für einen schnellen und gleichmäßigen Wärme- und Stoffaustausch sorgt.

Schließlich wird in einer Weiterbildung vorgeschlagen, daß mehrere Aktivierungsregeneratoren hintereinander angeordnet sind. Auf diese Weise ist es möglich, daß die Reaktionspartner in jeder der Stufen in optimal aktiviertem Zustand vorliegen, so daß damit ein optimaler Reaktionsablauf erzielt wird. Bei der Hintereinanderanordnung der Aktivierungsregeneratoren sind dabei vorzugsweise mehrere, jeweils als statische Mischer ausgebildete Wände vorgesehen.

Ein Ausführungsbeispiel einer erfindungsgemäßen Vorrichtung zur Minderung der NOₓ-Emission bei der Oxydation stickstoffhaltiger Brennstoffe oder bei der Reduktion von stickoxydhaltigen Abgasen oder Abdämpfen wird nachfolgend anhand der Zeichnungen beschrieben. In diesen zeigt:

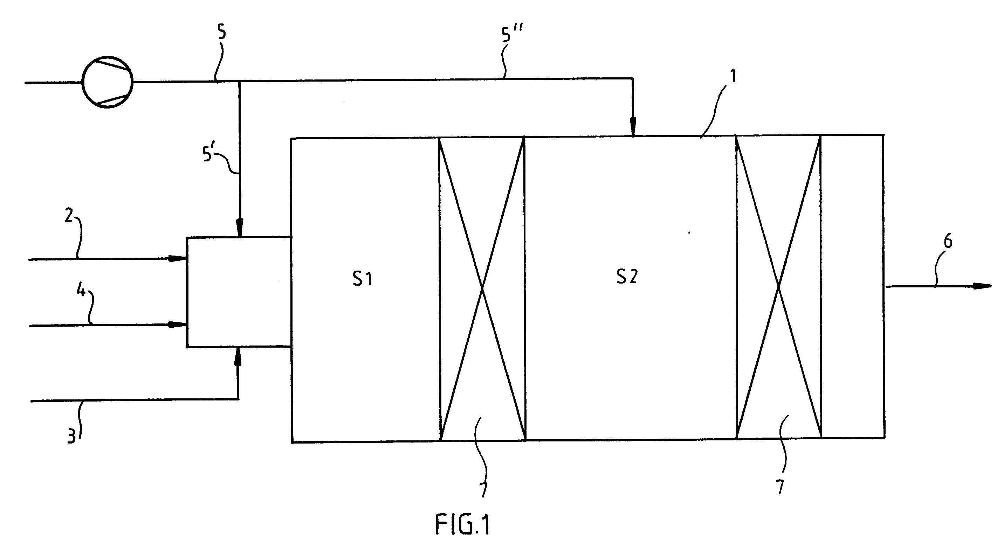

- Fig. 1: eine Seitenansicht der Vorrichtung zur Minderung der NOₓ-Emission in einer rein schematischen Darstellung;
- Fig. 2: eine ebenfalls rein schematische Seitenansicht der Vorrichtung in Fig. 1, welche als statischer Mischer ausgebildet ist;
- Fig. 3: eine Ansicht eines Aktivierungsregenerators in Form einer mit Durchtrittsöffnungen versehenen Wand der Vorrichtung in Fig. 1, bzw. in Fig. 2 in etwas vergrößertem Maßstab.

Ein Ofen 1 zur Oxydation (Verbrennung) stickstoffhaltiger Brennstoffe oder zur Reduktion von stickoxydhaltigen Abgasen oder Abdämpfen weist eine Brennstoffzuführung 2 für die stickstoffhaltigen Brennstoffe oder Reduktionsbrennstoffe sowie eine Abgas- oder Abdampfzuführung 3 für die stickoxydhaltigen Abgase oder Abdämpfe auf. Weiterhin ist eine Dampfzuführung 4 sowie eine Luftzuführung 5 vorgesehen, die sich in die Luftzuführungen 5',5'' verzweigt, die nacheinander im Ofen 1 münden.

Bei diesen Ofen 1 handelt es sich um einen sogenannten Stufenverbrennungsofen. Dieser weist zunächst eine erste Reaktionsstufe S1 sowie eine nachfolgende Nachreaktionsstufe S2 auf. Dabei mündet im Bereich der Reaktionsstufe S1 die Luftzuführung 5' und im Bereich der Nachreaktionsstufe S2 die Luftzuführung 5''. Ausgangsseitig weist der Ofen 1 schließlich noch eine Rauchgasabführung 6 auf.

Im Anschluß an die Reaktionsstufe S1 sowie Nachreaktionsstufe S2 ist jeweils ein Aktivierungsregenerator 7 in Form einer Wand angeordnet, welche den gesamten Ofenquerschnitt ausfüllt.

Jede dieser Wände besteht aus einzelnen Regeneratorelementen 8 in Form von Steinen, welche im wesentlichen quaderförmig ausgebildet sind und unterseitige Aussparungen aufweisen. Diese definieren in der Wand Durchtrittsöffnungen 9. Schließlich weisen die Steine auf ihren Oberflächen zusätzliche Noppen 10 auf.

Die Vorrichtung funktioniert wie folgt:
Über die Brennstoffzuführung 2 bzw. über die Abgas- oder Abdampfzuführung 3 wird dem Ofen 1 entweder stickstoffhaltiger Brennstoff und Reduktionsbrennstoff oder stickoxydhaltige Abgase oder Abdämpfe zugeführt. Während die erstgenannten stickstoffhaltigen Brennstoffe oxydieren, d.h. verbrannt werden sollen, werden letztere einer Reduktion unterzogen.

Die Verbrennung bzw. Nachoxydation erfolgt durch eine Stufenreaktion. Dabei wird der ersten Reaktionsstufe S1 über die Luftzuführung 5' eine derartige Menge Luft zugeführt, daß in dieser ersten Reaktionsstufe S1 eine partielle Oxydation im unterstöchiometrischen Bereich erfolgt. Aufgrund der unvollständigen Verbrennung in dieser ersten Reaktionsstufe S1 erfolgt keine vollständige Oxydation, so daß Kohlenmonoxyd und Wasserstoff entsteht. Diese bilden die Reaktionspartner zur Reduktion von NOₓ zu Stickstoff und Wasser in der Nachreaktionsstufe S2.

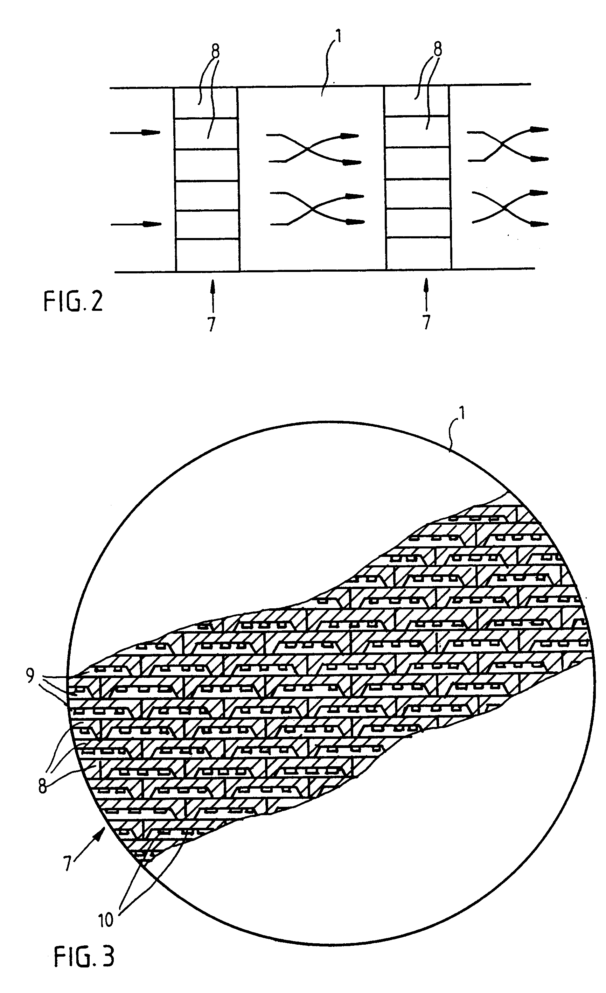

Der Aktivierungsregenerator 7 in Form der Wand zwischen der Reaktionsstufe S1 und der Nachreaktionsstufe S2 sowie die Wand im Anschluß an die Nachreaktionsstufe S2 bewirken eine Vermischung der Reaktionspartner sowohl im Makrobereich als auch im Mikrobereich. Dies ist in Fig. 2 schematisch angedeutet. Darüber hinaus sorgen die Wände, welche sowohl aus keramischen als auch aus metallischen Werkstoffen hergestellt sein können, für einen schnellen Wärmestromausgleich, welcher im wesentlichen durch einen intensiven Strahlungswärmeaustausch erreicht wird.

Durch die Verwirbelung der Reaktionspartner einerseits mit der daraus resultierenden homogenen Verteilung aller Reaktionspartner und der Einstellung der gleichen Temperatur in jedem Volumenelement aufgrund der hohen Wärmekapazität der Wände andererseits und dem somit bedingten guten Wärmeaustausch durch Strahlung erfolgt eine Reaktionsbeschleunigung innerhalb des Ofens 1, welche auf wirtschaftlich günstige Weise zu einer Minderung der NOₓ-Emission in der Rauchgasabführung 6 führt.

Die Zuführung von Wasserdampf durch die Wasserdampfzuführung 4 bewirkt dabei eine Verschiebung der Gleichgewichtskonzentrationen in Richtung eines besseren Reduktionspotentials. Mit dem Anteil von Wasserdampf in der Reaktionsphase kann darüber hinaus der Ausfall von Rußkristallen unterbunden werden, so daß damit eine erhebliche Verminderung des wirksamen Reduktionspotentials vermieden wird.

## Patentansprüche

1. Verfahren zur Minderung der NOₓ-Emission bei der thermischen Umsetzung von stickstoffhaltigen Stoffströmen, die z.B. mit Lachgas und/oder Stickstoffmonoxid beladen sind, mit Brennstoffkomponenten oder bei der Oxydation von stickstoffhaltigen Brennstoffen mit Sauerstoff oder Luft durch eine stufenweise Reaktionsführung, wobei in der ersten Stufe bei unterstöchiometrischer Sauerstoffzufuhr eine vollständige Reaktion aller vorhandenen oder sich spontan bildenden Stickstoffoxide erfolgt und in einer nachfolgenden Stufe bzw. mehreren nachfolgenden Stufen eine Nachreaktion bis zur vollständigen Oxydation aller Reduktionskomponenten durchgeführt wird, dadurch gekennzeichnet, daß die Oxydation der Reduktionskomponenten in mindestens einer Nachreaktionsstufe mit kinetischer Unterstützung von durch eine Vielzahl von Kanälen gebildeten Aktivierungsregeneratoren erfolgt, in denen eine intensive Vermischung der Reaktionspartner und eine Vergleichsmäßigung der Temperatur über den gesamten Strömungsquerschnitt stattfindet.

2. Verfahren nach Anspruch 1, dadurch gekennzeichnet, daß die Reaktionspartner auch in der ersten Reaktionsstufe durch einen Aktivierungsregenerator geleitet werden.

3. Verfahren nach einem der Ansprüche 1 bis 2, dadurch gekennzeichnet, daß den Reaktionsstufen mit reduzierender Atmosphäre zusätzlich Wasserdampf als Reaktionspartner zugeführt wird.

4. Verfahren nach einem der Ansprüche 1 bis 3, dadurch gekennzeichnet, daß die Reaktionspartner in der jeweiligen Reaktionsstufe in Abhängigkeit von der optimalen Reaktionstemperatur im entsprechenden Verhältnis zueinander eingebracht werden.

5. Verfahren nach einem der Ansprüche 1 bis 4, dadurch gekennzeichnet, daß die Temperatur in jeder Reaktionsstufe mit zurückgeführtem, kaltem Rauchgas geregelt wird.

6. Vorrichtung zur Durchführung des Verfahrens nach Anspruch 1 - 5, bestehend aus einem Ofen (1), der eine Brennstoffzuführung (2), bzw. eine Abgaszuführung (3), sowie Sauerstoff- oder Luftzuführungen (5',5'') umfaßt, dadurch gekennzeichnet, daß der Ofen (1) durch mindestens einen Aktivierungsregenerator (7) in eine erste Reaktionsstufe S1 und mindestens eine darauffolgende Nachreaktionsstufe S2 unterteilt ist, wobei die erste Reaktionsstufe S1 die Brennstoffzuführung (2) bzw. die Abgaszuführung (3) und eine Sauerstoff- oder Luftzuführung (5') aufweist und in die Nachreaktionsstufe S1 als einzige Zuführung nur eine Sauerstoff- oder Luftzuführung (5'') einmündet.

7. Vorrichtung nach Anspruch 6, dadurch gekennzeichnet, daß der Aktivierungsregenerator (7) aus einer termperaturbeständigen, keramischen oder metallischen Wand mit Durchtrittsöffnungen (9) besteht.

8. Vorrichtung nach einem der Ansprüche 6 bis 7, dadurch gekennzeichnet, daß die Wand als Gitterwerk aus feuerfestem, keramischem Material ausgebildet ist und aus einzelnen feuerfesten Steinen oder Platten besteht, die fest miteinander verbunden aufeinandergeschichtet sind.

9. Vorrichtung nach Anspruch 8, dadurch gekennzeichnet, daß die Steine oder Platten auf ihren Oberflächen jeweils zusätzliche Noppen (10) oder dergleichen aufweisen.

10. Vorrichtung nach einem der Ansprüche 6 bis 9, dadurch gekennzeichnet, daß mindestens ein Aktivierungsregenerator (7) als statischer Mischer ausgebildet ist.

## Claims

1. A process for reducing NOₓ emissions in the thermal reaction of nitrogen-containing product streams - charged, for example, with laughing gas and/or nitrogen monoxide - with fuel components or in the oxidation of nitrogen-containing fuels with oxygen or air by a multistage reaction, all the nitrogen oxides present or spontaneously formed being completely reduced in the first stage fed with less than the stoichiometric quantity of oxygen and then being reacted in one or more following stages until all the reduction components have been completely oxidized, characterized in that oxidation of the reduction components takes place in at least one after-reaction stage kinetically supported by activation regenerators in which the reactants are intensively mixed and a uniform temperature is established over the entire flow cross-section.

2. A process as claimed in claim 1, characterized in that the reactants are passed through an activation regenerator in the first reaction stage also.

3. A process as claimed in claim 1 or 2, characterized in that steam is additionally supplied as reactant to the reaction stages with a reducing atmosphere.

4. A process as claimed in any of claims 1 to 3, characterized in that, depending on the optimal reaction temperature, the reactants are introduced into the particular reaction stage in the corresponding ratio to one another.

5. A process as claimed in any of claims 1 to 4, characterized in that the temperature in each reaction stage is regulated with recycled, cold waste gas.

6. An arrangement for carrying out the process claimed in claims 1 to 5 consisting of a furnace (1) comprising a fuel feed pipe (2) or a waste gas feed pipe (3) and an oxygen or air feed pipe (5',5''), characterized in that the furnace (1) is divided by at least one activation regenerator (7) into a first reaction stage S1 and at least one following after-reaction stage S2, the first reaction stage S1 comprising the fuel feed pipe (2) or the waste gas feed pipe (3) and an oxygen or air feed pipe (5') and only one oxygen or air feed pipe (5'') opening as sole feed pipe into the after-reaction stage S1.

7. An arrangement as claimed in claim 6, characterized in that the activation regenerator (7) consists of a heat-resistant ceramic or metallic wall with throughflow openings (9).

8. An arrangement as claimed in claim 6 or 7, characterized in that the wall is a checkerwork of refractory ceramic material and consists of individual refractory bricks or tiles which are joined firmly to one another in vertical layers.

9. An arrangement as claimed in claim 8, characterized in that the bricks or tiles comprise additional pimples (10) or the like on their surfaces.

10. An arrangement as claimed in any of claims 6 to 9, characterized in that at least one activation regenerator (7) is in the form of a static mixer.

## Revendications

1. Procédé de diminution des émissions d'oxydes d'azote pendant la réaction thermique de courants de substances azotées qui peuvent contenir, par exemple, du gaz hilarant et/ou du monoxyde d'azote, avec des composants combustibles ou pendant l'oxydation de combustibles azotés avec de l'oxygène ou de l'air par une réaction réalisée de manière étagée, dans lequel, au cours de la première étape et avec adduction d'oxygène inférieure à la proportion stoechiométrique, on réalise une réaction complète de tous les oxydes d'azote existants ou se formant spontanément et qu'au cours d'un étage ou de plusieurs étages ultérieur(s), on effectue une post-réaction jusqu'à l'oxydation complète de tous les composants réducteurs, caractérisé en ce que l'oxydation des composants réducteurs est effectuée dans au moins un étage de post-réaction avec l'aide cinétique apportée par un grand nombre de régénérateurs d'activation formés par des canaux dans lesquels se produit un mélangé intime de réactifs et une égalisation de la température dans toute la section d'écoulement.

2. Procédé selon la revendication 1, caractérisé en ce que les réactifs sont amenés également dans le premier étage de réaction à travers un régénérateur d'activation.

3. Procédé selon l'une des revendications 1 ou 2, caractérisé en ce que les étages de réaction à atmosphère réductrice reçoivent, en outre, une adduction de vapeur d'eau comme réactif.

4. Procédé selon l'une des revendications 1 à 3, caractérisé en ce que les réactifs de chaque étage de la réaction sont introduits avec une proportion appropriée les uns par rapport aux autres, en fonction de la température de réaction optimale.

5. Procédé selon lune des revendications 1 à 4, caractérisé en ce que la température de chaque étage de réaction est réglée au moyen de gaz de fumées froids et recyclés.

6. Dispositif pour la mise en oeuvre du procédé selon les revendications 1 à 5, constitué d'un four (1), qui comprend une adduction de combustible (2) ou une adduction de gaz résiduaires (3), ainsi que des adductions d'oxygène ou d'air (5', 5''), caractérisé en ce que le four (1) est subdivisé par au moins un régénérateur d'activation (7) en un premier étage de réaction S1 et au moins un étage suivant de post-réaction S2, dans lequel le premier étage de réaction S1 comprend l'adduction de combustible (2) ou l'adduction de gaz résiduaires (3) et une adduction d'oxygène ou d'air (5') et que l'étage de post-réaction S1 ne comporte qu'une adduction d'oxygène ou d'air (5''), comme seule adduction.

7. Dispositif selon la revendications 7, caractérisé en ce que le régénérateur d'activation (7) est constitué d'une paroi résistant aux hautes températures, en matériau céramique ou métallique, avec des orifices de passage (9).

8. Dispositif selon l'une des revendications 6 ou 7, caractérisé en ce que la paroi est constituée d'un grillage en matériau céramique réfractaire et de briques ou de plaques réfractaires séparées qui sont superposées avec assemblage solide des unes avec les autres.

9. Dispositif selon la revendication 8, caractérisé en ce que les briques ou les plaques présentent à leur surface des saillies supplémentaires (10) ou des éléments semblables.

10. Dispositif selon l'une des revendications 6 à 9, caractérisé en ce qu'au moins un régénérateur d'activation (7) joue le rôle de mélangeur statique.
